# EUROPEAN PATENT SPECIFICATION

(11) **EP 1 848 646 B1**
(45) Date of publication and mention of the grant of the patent: **29.08.2012**
(21) Application number: 06709663.6
(22) Date of filing: 07.02.2006
(51) Int. Cl.: B65D 75/08, B65D 85/671

(54) **A REUSABLE WRAPPER FOR A ROLL OF MATERIAL**
WIEDERVERWENDBARE HÜLLE FÜR EINE MATERIALROLLE
EMBALLAGE REUTILISABLE POUR ROULEAU DE MATIERE

(30) Priority: 18.02.2005 GB 0503472
(43) Date of publication of application: 31.10.2007
(73) Proprietor: Real Time Logistics Solutions Limited, Slyfield Industrial Estate Guildford, Surrey GU1 1RU (GB)
(72) Inventor: Hogg, Douglas Stuart, Camberley Surrey GU16 7ER (GB)
(74) Representative: Jones, Graham Henry
(86) International application number: PCT/GB2006/000419
(87) International publication number: WO 2006/087519

(56) References cited:
- EP-A- 0 494 750
- EP-A- 1 113 319
- US-A- 2 690 838
- US-A- 4 860 893
- US-A1- 2004 011 686

## Description

This invention relates to a wrapper for a roll of material and, more especially, this invention relates to a reusable wrapper for a roll of material.

Industrial rolls of material, for example rolls of printing paper, are currently wrapped in cardboard in order to protect the rolls of material during transport from a supplier to an end user. In most cases, the cardboard wrapping contains some form of waterproof material in order to protect the material from getting wet or losing moisture. The known cardboard wrapping usually comprises a body wrap portion for extending around the circumference of the roll of material, a first end member for covering a first end of the roll of material, and a second end member for covering a second end of the roll of material. The body wrap portion is normally wound 1.5 times around the circumference of the roll of material. The body wrap portion is glued to itself in order to secure the body wrap portion on the roll of material. The body wrap portion is usually wider than the roll of material, so that there is an overhang when the body wrap portion is wrapped around the circumference of the roll of material. This overhang is folded down to extend parallel to the first and second ends of the roll of material. This folding down of the overhang protects the corners of the roll of material, and also protects part of the exposed first and second ends. The first and second end members are able to be attached to the folded down overhang sections, for example by an adhesive.

When a wrapped roll of material is ready for use by an end user, an operator will normally insert a sharp knife between each end of the roll of material and its adjacent end member. The end members are cut off by rolling the roll of material whilst holding the knife in an appropriate position. From a health and safety aspect, this practice is not the safest way to remove the end caps. There is a possibility that the operator will cut themselves. There is also a possibility that the operator will not insert the knife in exactly the correct position, in which case the material in the roll of material will be damaged.

The first and second end members are disposed of as waste. The operator then needs to remove the body wrap portion. To do this, the operator may use a plastic tool which has a sharp point at one end, and which is inserted between the body wrap portion and the surface of the outer layer of material on the roll of material. By pushing the plastics tool across the roll of material, the body wrap portion is split and it falls away. Once the unwrapped roll of material is rolled off the body wrap portion, the body wrap portion can be thrown away as waste.

Due to the fact that the waste material, formed by the body wrap portion and the first and second end members, has a waterproofing chemical included in it, it is difficult to recycle this waste wrapping.

EP-A-1113319 discloses a light-shielding packaging for a roll of photosensitive material wound on a core. The packaging comprises a body wrap portion for extending around the roll of photosensitive material, a first end member for covering a first end of the roll of photosensitive material, and a second end member for covering a second end of the roll of photosensitive material.

It is an aim of the present invention to obviate or reduce the above mentioned problems.

Accordingly, the present invention provides a wrapper for a roll of material, which wrapper comprises a body wrap portion for extending around the circumference of the roll of material, a first end member for covering a first end of the roll of material, a second end member for covering a second end of the roll of material, and fastener means which forms an integral part of the wrapper, which enables the wrapper to be secured around the roll of material to protect the roll of material until the roll of material is to be used, which enables the wrapper to be removed from the roll of material when the roll of material is to be used, and which enables the wrapper to be a reusable wrapper for subsequent use on other rolls of material, and that the fastener means is a hook and loop fastener means, and the hook and loop fastener means comprises a pad which is on an inside face of a first end of the body wrap portion and which extends across the entire inside face of the first end of the body wrap portion, a plurality of strips which are on an outside face of the body wrap portion and which extend transversely across the outside face of the body wrap portion such that the pad and the plurality of strips are attachable to each other to enable the wrapper to be secured around rolls of material of different diameters, and a first pair of strips which are positioned on the outside face of the body wrap portion and which extend longitudinally one along each edge of a second end of the body wrap portion such as to enable the first and second end members to be attached to the body wrap portion.

A suitable hook and loop fastener means is available under the Registered Trade Mark VELCRO.

The wrapper may be one in which the body wrap portion has longitudinally extending edge portions which overhang the sides of the roll of material, in which the longitudinally extending edge portions are foldable to lie alongside the sides of the roll of material, and in which the longitudinally extending edge portions have the first pair of strips for securing to hook and loop fastener means on the first and second end members.

The wrapper may be one in which the hook and loop fastener means comprises a second pair of strips which are positioned on the outside face of the body wrap portion and which extend longitudinally one along each edge of the second end of the body wrap portion, and in which the second pair of strips secure to the plurality of strips which are on the outside face of the body wrap portion and which extend transversely across the outside face of the body wrap portion, and thereby act to keep the longitudinally extending edge portions in their folded condition.

The first and second end members may be completely separable from the body wrap portion. Alternatively, the first and second end members may be attached to each side of the body wrap portion. This may be effected by having the first and the second end members each connected to the body wrap portion by an integrally formed hinge. With connected first and second end members, they cannot get lost during use.

The wrapper may include reflective tape positioned adjacent the first end of the body wrap portion that needs to be opened. This enables the appropriate end of the body wrap portion easily to be identified by an operator commencing to open the wrapper. Other types of locator means for indicating where to open the wrapper may be employed. The provision of the locator means may be especially useful for allowing automated unwrapping machines easily to locate the appropriate end of the body wrap portion.

The wrapper may include at least one identity tag. Preferably, the identity tag is a radio frequency identity tag. The identity tag enables information regarding the wrapper to be sent back to tag reader means at a control station. The progress of the wrapper and its protected roll of material can thus be checked, for example from a mill to a warehouse, docks, a customer store or to an end use machine.

Preferably, each separate part of the wrapper is provided with one of the identity tags.

Preferably, the wrapper is made of water resistant material. Preferably, the wrapper is made of a flexible reinforced plastics material similar to that used in marquees or in heavy goods vehicle trailers with curtain sides. This material is very strong and it can be used many times.

The material in the roll of material may be paper, fabric or any material that is made and used in rolls. Usually the rolls will be large industrial rolls.

The present invention also extends to a roll of material when provided with the wrapper.

Embodiments of the invention will now be described solely by way of example and with reference to the accompanying drawings in which:
Figure 1 is an exploded view of a roll of material provided with a known wrapper;
Figure 2 shows the wrapper and the roll of material of Figure 1, with the wrapper about to be cut in order to enable the roll of material to be used;
Figure 3 is an exploded view of a first wrapper of the present invention on a roll of material;
Figure 4 shows in more detail how a body wrap portion of the wrapper is secured in position on the roll of material;
Figure 5 illustrates how the body wrap portion is bent over at its ends in order to form securing means for securing first and second end members of the wrapper in position; and
Figure 6 shows a second wrapper of the present invention, the second wrapper being provided with locator means.

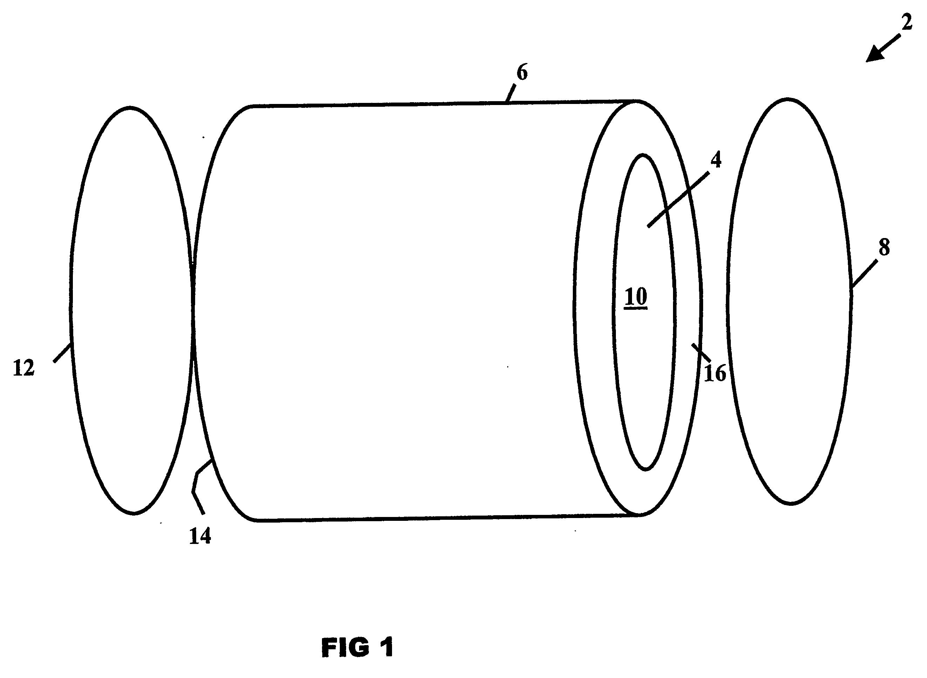

Referring to Figure 1, there is shown a known wrapper 2 for a roll of material 4. The wrapper 2 comprises a body wrap portion 6 for extending around the circumference of the roll of material 4. The wrapper 2 also comprises a first end member 8 for covering a first end 10 of the roll of material 4. The wrapper 2 further comprises a second end member 12 for covering a second end 14 of the roll of material 4.

The wrapper 2 is such that the body wrap portion 6 is made of cardboard. It is wound 1.5 times around the roll of material 4, and then it is stuck to itself by an adhesive. The body wrap portion 6 is wider than the roll of material 4 so that the overhang portions at each end of the roll of material 4 can be folded down into protective end portions 16. The protective end portions 16 protect the corners of the roll of material 4, and also the illustrated part of the exposed first and second ends 10, 14. The protective end portions 16 form a surface against which the first and second end members 8, 12 can be secured by an adhesive.

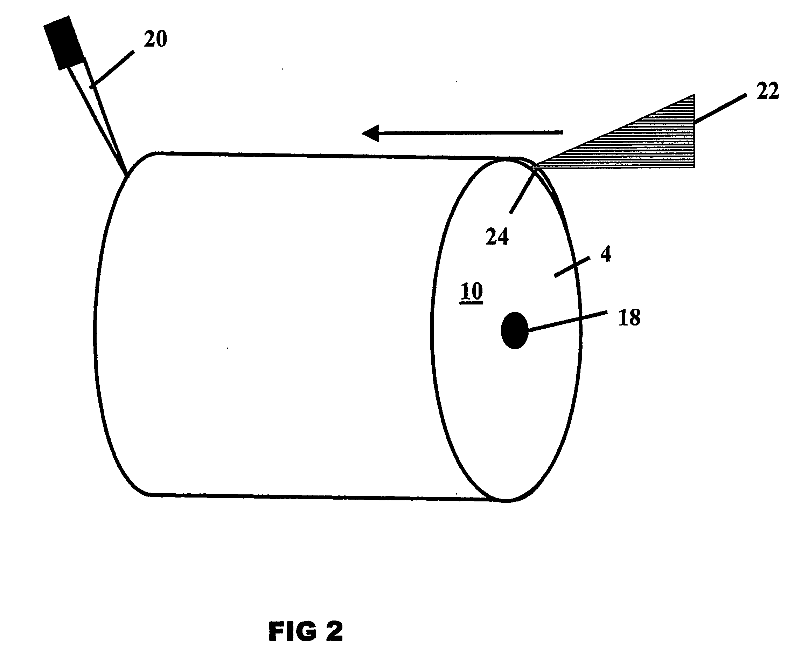

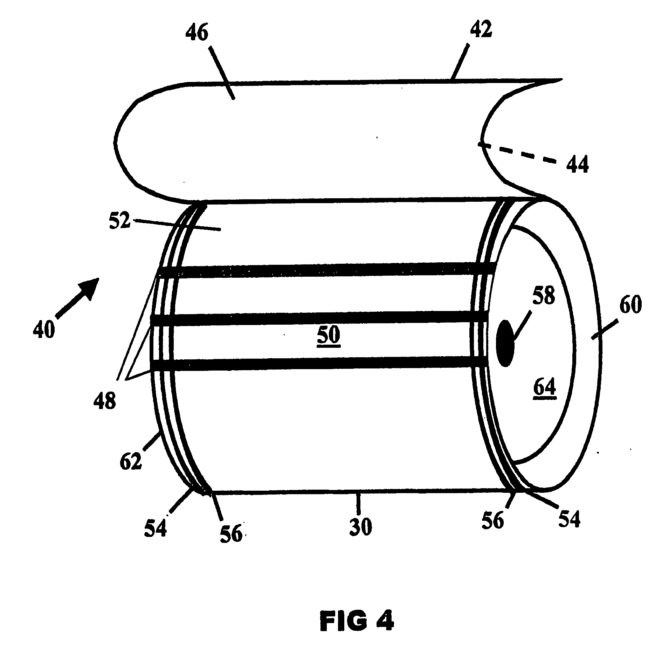

Figure 2 illustrates how the wrapper 2 is removed from the roll of material 4. As can be seen from Figure 4, the roll of material 4 is wound on a core 18. The first step in removing the wrapper 2 is to insert a sharp knife 20 between the first end member 8 and the adjacent first end 10 of the roll of material 4. If the roll of material 4 is then rolled, the first end member 10, which is often referred to as an end cap, is cut off the roll of material 4. Figure 2 shows the first end member 8 having been cut away, and the knife 20 being inserted between the second end member 12 and the second end 14 of the roll of material 4, in order to remove the second end member 12. When the second end member 12 has also been removed from the roll of material 4, the first and second end members 8 and 12 are disposed of as waste. An operator then removes the body wrap portion 6 by inserting a plastics wedge-shaped tool 22 between the roll of material 4 and the body wrap portion 6. In order to facilitate this, it will be seen that the tool 2 has a pointed end 24. When the tool 22 has been pushed across the entire roll of the material 4, then body wrap portion 6 is split and it falls away. The roll of material 4 can then be rolled off the body wrap portion 6. The body wrap portion 6 can then be disposed of as waste.

The body wrap portion 6 and the first and second end members 8,12 often contain waterproofing agents. This makes them difficult to recycle. In addition, there is the obvious waste of material required to form the body wrap portion 6 and the first and second end members 8, 12. Still further, if the weight of the roll of material is required to be known, as may often be required for example in the printing industry, then the weight of the body wrap portion 6 and the first and second end members 8, 10 may give incorrect readings which may in turn give incorrect quality control figures and/or incorrect costing figures.

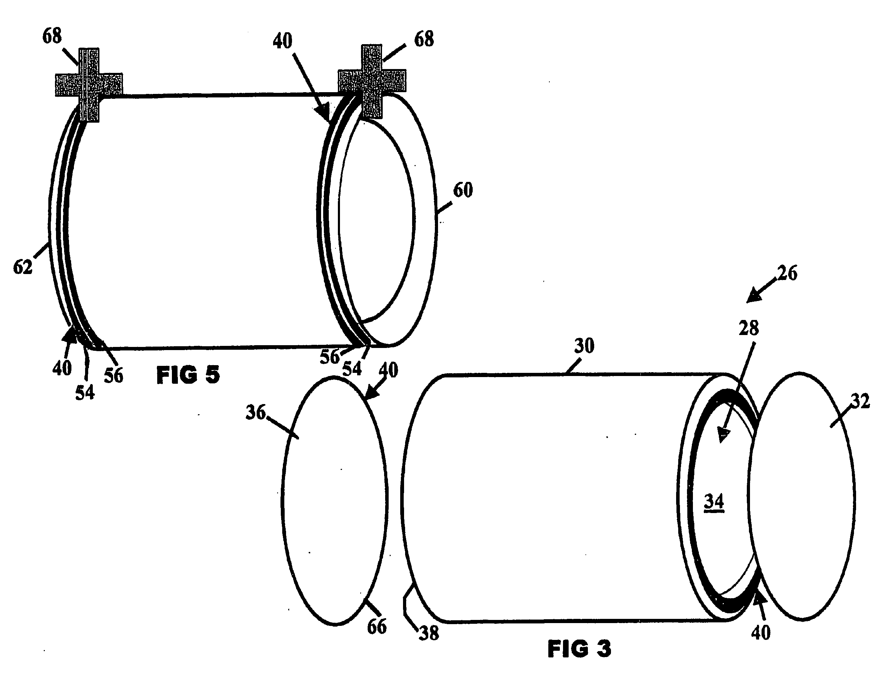

Referring now to Figure 3, there is shown a first wrapper 26 of the invention and which is for a roll of material 28. The wrapper 26 comprises a body wrap portion 30 for extending around the circumference of the roll of material 28. The wrapper 26 also comprises a first end member 32 for covering a first end 34 of the roll of material 28, and a second end member 36 for covering a second end 38 of the roll of material 28.

The wrapper comprises fastener means 40. The fastener means 40 forms an integral part of the wrapper 26. The fastener means 40 enables the wrapper 26 to be secured around the roll of material 28 to protect the roll of material 28 until the roll of material 28 is to be used. The fastener means 40 enables the wrapper 26 to be removed from the roll of material 28 when the roll of material 28 is to be used. The fastener means 40 enables the wrapper 26 to be a reusable wrapper for subsequent use on other rolls of material.

As best appreciated from Figures 3, 4 and 5, the fastener means 40 is a push-to-fasten and a pull-to-unfasten fastener means 40. More specifically, the fastener means 40 is a hook and loop fastener means 40 of the type sold under the Registered Trade Mark VELCRO. The hook and loop fastener means 40 comprises a pad 42 which is on an inside face 44 of a first end 46 of the body wrap portion 30. The pad 42 extends across the entire inner face 44 of the first end 46 of the body wrap portion 30 as shown in Figure 4. The fastener means 40 also comprises a plurality of strips 48 which are on an outside face 50 of the body wrap portion 30. The strips 48 extend transversely across the outside face 50 of a second end 52 of the body wrap portion 30 as shown in Figure 4.

The fastener means 40 also comprises a first pair of strips 54 which are positioned on the outside face 50 of the body wrap portion 30. The pair of strips 54 extend longitudinally as shown one along each edge of the second end 52 of the outside face 50 of the body wrap portion 30.

The fastener means 40 in the form of the pad 42 and the strips 48 enable the body wrap portion 30 to be secured around the roll of the material 28. The strips 48 enable the body wrap portion 30 to be secured around rolls of material 28 of different diameters. The roll of material 28 is itself wound on a core 58.

The first pair of strips 54 are positioned one on each of longitudinally extending edges 60, 62 at either side of the roll of material 28. These edge portions 60, 62 overhang the sides 64 of the roll of material 28. The edge portions 60, 62 are foldable to lie alongside the sides 64 of the roll of material 28. The strips 54 secure to complementary hook and loop fastener means 66 on the first and second end members 32, 36, and thereby enable the first and second end members 32, 36 to be releasably secured to the body wrap portion 30.

The wrapper 26 comprises a second pair of strips 56 which are positioned on the outside face 50 of the body wrap portion 30 and which extend longitudinally one along each edge of the second end 52 of the body wrap portion 30. The second pair of strips 56 secure to the plurality of strips 48 which are on the outside face 50 of the body wrap portion 30 and which extend transversely across the outside face 50 of the body wrap portion 30, and thereby keep the longitudinally extending edge portions 60, 62 in their folded condition. More specifically, because the strips 48, 56 secure to each other, they maintain the edge portions 60, 62 in their folded condition and they act to counter any resilience in the material of the body wrap portion 30 which acts to cause the folded edge portions 60, 62 to spring open.

Preferably, the loop part of the hook and loop fastener means is used for the pad 42, the strip 56, and the fastener means 66 on the first and second end members 32, 36. The hook part of the fastener means is then used for the strips 48, 54. The reverse arrangement may be employed if desired.

Figure 5 also shows schematically equipment 68 which uses paddle wheels to fold the edge portions 60, 62 around the ends of the roll of material 28 and over the ends 34, 38 of the roll of material 28.

As shown in Figure 3, the first and the second end members 32, 36 are completely separable from the body wrap portion 30.

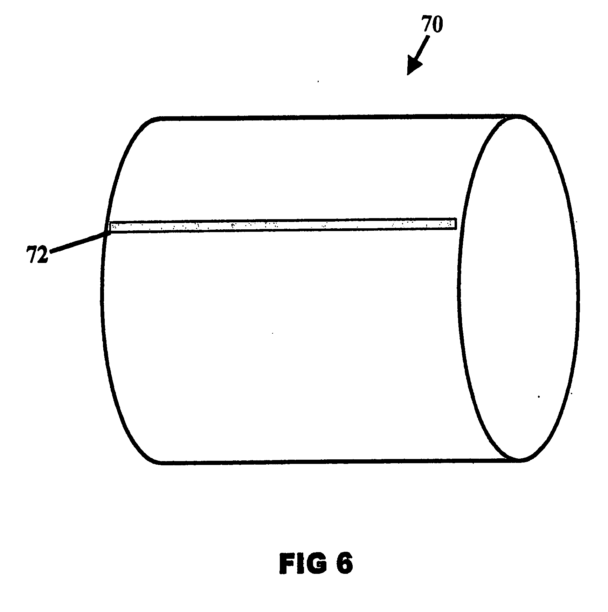

Referring to Figure 6, there is shown a second wrapper 70 of the invention. This wrapper 70 is constructed similarly to the wrapper 26 except that the wrapper 70 is provided with locator means in the form of a strip of diamond reflective tape 72. The tape 72 is on the first end 46 of the body wrap portion 30 which overlaps the second end 52. The tape 72 thus indicates where the first end 46 needs to be pulled in order to undo the body wrap portion 30. The tape 72 is helpful in locating the start of the first end 46, both on occasions when the body wrap portion 30 is to be manually undone, and also if the body wrap portion 30 is to be automatically undone with an appropriate piece of machinery.

It is to be appreciated that the embodiments of the invention described above with reference to the accompanying drawings have been given by way of example only and that modifications may be effected. Thus, for example, the first and second end members 32, 36 could each be connected to the body wrap portion 30 by an integrally formed hinge. Fastener means other than the VELCRO (Registered Trade Mark) may be employed. Strips and pads for the fastener means may be differently shaped to those shown. For example, one strip 48, 54 that connects to the first and second end members 32, 36 may be wider than the other strip 48, 54 in order to provide a good percentage of the strip 48, 54 for connection to the first and second end members 32, 36. The wrappers 26, 70 can be made of a wide variety of waterproof plastics materials. The illustrated roll of material covered by the wrappers 26, 70 is a roll of paper, but the roll of material may be other than paper if desired.

## Claims

1. A wrapper (26) for a roll of material (28), which wrapper (26) comprises a body wrap portion (30) for extending around the circumference of the roll of material (28), a first end member (32) for covering a first end (34) of the roll of material (28), a second end member (36) for covering a second end (38) of the roll of material (28), and fastener means (40) which forms an integral part of the wrapper (26), which enables the wrapper (26) to be secured around the roll of material (28) to protect the roll of material (28) until the roll of material (28) is to be used, which enables the wrapper (26) to be removed from the roll of material (28) when the roll of material (28) is to be used, and which enables the wrapper (26) to be a reusable wrapper (26) for subsequent use on other rolls of material, **characterised in that** the fastener means (40) is a hook and loop fastener means (40), and the hook and loop fastener means (40) comprises a pad (42) which is on an inside face (44) of a first end (46) of the body wrap portion (30) and which extends across the entire inside face (44) of the first end (46) of the body wrap portion (30), a plurality of strips (48) which are on an outside face (50) of the body wrap portion (30) and which extend transversely across the outside face (50) of the body wrap portion (30) such that the pad (42) and the plurality of strips (48) are attachable to each other to enable the wrapper (26) to be secured around rolls of material of different diameters, and a first pair of strips (54) which are positioned on the outside face (50) of the body wrap portion (30) and which extend longitudinally one along each edge of a second end (52) of the body wrap portion (30) such as to enable the first and second end members (32, 36) to be attached to the body wrap portion (30).

2. A wrapper (26) according to claim 1 in which the body wrap portion (30) has longitudinally extending edge portions (60, 62) which overhang the sides (64) of the roll of material (28), in which the longitudinally extending edge portions (60, 62) are foldable to lie alongside the sides (64) of the roll of material (28), and in which the longitudinally extending edge portions (60, 62) have the first pair of strips (54) for securing to hook and loop fastener means (66) on the first and second end members (32, 36).

3. A wrapper (26) according to claim 1 or claim 2 in which the hook and loop fastener means (40) comprises a pair of strips (56) which are positioned on the outside face (50) of the body wrap portion (30) and which extend longitudinally one along each edge of the second end (52) of the body wrap portion (30), and in which the second pair of strips (56) secure to the plurality of strips (48) which are on the outside face (50) of the body wrap portion (30) and which extend transversely across the outside face (50) of the body wrap portion (30) and thereby act to keep the longitudinally extending edge portions (60, 62) in their folded condition.

4. A wrapper (26) according to any one of the preceding claims in which the first and second ends members (32, 36) are completely separable from the body wrap portion (30).

5. A wrapper (26) according to any one of the preceding claims and including reflective tape (72) positioned adjacent the first end (46) of the body wrap portion (30) that needs to be opened.

6. A wrapper (26) according to any one of the preceding claims and including an identity tag.

7. A wrapper (26) according to claim 6 in which each separate part of the wrapper (26) has one of the identity tags.

8. A wrapper (26) according to any one of the preceding claims and which is made of a water-resistant material.

9. A roll of material (28) when provided with a wrapper (26) according to any one of the preceding claims.

## Patentansprüche

1. Hülle (26) für eine Materialrolle (28), wobei die Hülle (26) einen Körperumhüllungsabschnitt (30) aufweist, der sich um den Umfang der Materialrolle (28) erstreckt, ein erstes Endelement (32) zum Bedeckten eines ersten Endes (34) der Materialrolle (28), ein zweites Endelement (36) zum Bedecken eines zweiten Endes (38) der Materialrolle (28) und ein Befestigungsmittel (40), das einen einheitlichen Teil der Hülle (26) bildet, das ermöglicht, dass die Hülle (26) um die Materialrolle (28) befestigt werden kann, um die Materialrolle (28) zu schützen, bis die Materialrolle (28) verwendet wird, das ermöglicht, dass die Hülle (26) von der Materialrolle (28) entfernt wird, wenn die Materialrolle (28) verwendet wird, und das ermöglicht, dass die Hülle (26) eine wieder verwendbare Hülle (26) zur anschließende Verwendung an anderen Materialrollen ist, **dadurch gekennzeichnet, dass** das Befestigungsmittel (40) ein Haken- und Ösen-Befestigungsmittel (40) ist und dass das Haken- und Ösen-Befestigungsmittel (40) ein Polster (42) aufweist, das sich an einer Innenfläche (44) eines ersten Endes (46) des Körperumhüllungsabschnitts (30) befindet und sich über die gesamte Innenfläche (44) des ersten Endes (46) des Körperumhüllungsabschnitts (30) erstreckt, sowie mehrere Streifen (48), die sich an einer Außenfläche (50) des Körperumhüllungsabschnitts (30) befinden und sich quer über die Außenfläche (50) des Körperumhüllungsabschnitts (30) erstrecken, so dass das Polster (42) und die mehreren Streifen (48) aneinander befestigbar sind, um eine Befestigung der Hülle (26) um Materialrollen unterschiedlicher Durchmesser zu ermöglichen, und ein erstes Paar Streifen (54), die an der Außenfläche (50) des Körperumhüllungsabschnitts (30) positioniert sind und sich in Längsrichtung jeweils entlang jedes Randes eines zweiten Endes (52) des Körperumhüllungsabschnitts (30) erstrecken, so dass das erste und zweite Endelement (32, 36) an dem Körperumhüllungsabschnitt (30) befestigt werden können.

2. Hülle (26) nach Anspruch 1, wobei der Körperumhüllungsabschnitt (30) sich in Längsrichtung erstreckende Randabschnitte (60, 62) aufweist, die über die Seiten (64) der Materialrolle (28) hängen, wobei die sich in Längsrichtung erstreckenden Randabschnitte (60, 62) faltbar sind, so dass sie entlang den Seiten (64) der Materialrolle (28) liegen, und wobei die sich in Längsrichtung erstreckenden Randabschnitte (60, 62) das erste Paar von Streifen (54) zur Befestigung an Haken- und Ösen-Befestigungsmitteln (66) am ersten und zweiten Endelement (32, 36) ausweisen.

3. Hülle (26) nach Anspruch 1 oder Anspruch 2, wobei das Haken- und Ösen-Befestigungsmittel (40) ein Paar von Streifen (56) aufweist, die an der Außenfläche (50) des Körperumhüllungsabschnitts (30) positioniert sind und die sich jeweils in Längsrichtung entlang jedes Randes des zweiten Endes (52) des Körperumhüllungsabschnitts (30) erstrecken, und wobei das zweite Paar von Streifen (56) an den mehreren Streifen (48) befestigt ist, die sich an der Außenfläche (50) des Körperumhüllungsabschnitts (30) befinden und die sich quer über die Außenfläche (50) des Körperumhüllungsabschnitts (30) erstrecken und dadurch die sich in Längsrichtung erstreckenden Randabschnitte (60, 62) in ihrem gefalteten Zustand halten.

4. Hülle (26) nach einem der vorangehenden Ansprüche, wobei das erste und zweite Endelement (32, 36) vollständig vom Körperumhüllungsabschnitt (30) trennbar sind.

5. Hülle (26) nach einem der vorangehenden Ansprüche und ein reflektierendes Band (72) enthaltend, das neben dem ersten Ende (46) des Körperumhüllungsabschnitts (30) positioniert ist, das geöffnet werden soll.

6. Hülle (26) nach einem der vorangehenden Ansprüche und eine Identifikationskennzeichnung enthaltend.

7. Hülle (26) nach Anspruch 6, wobei jedes separate Teil der Hülle (26) eine der Identifikationskennzeichnungen aufweist.

8. Hülle (26) nach einem der vorangehenden Ansprüche, die aus einem wasserbeständigen Material hergestellt ist.

9. Materialrolle (28), wenn sie mit einer Hülle (26) nach einem der vorangehenden Ansprüche versehen ist.

## Revendications

1. Emballage (26) pour un rouleau de matière (28), lequel emballage (26) comprend une portion d'enveloppement de corps (30) destinée à s'étendre autour de la circonférence du rouleau de matière (28), un premier organe d'extrémité (32) destiné à couvrir une première extrémité (34) du rouleau de matière (28), un deuxième organe d'extrémité (36) destiné à couvrir une deuxième extrémité (38) du rouleau de matière (28), et un moyen d'attache (40) qui fait partie intégrante de l'emballage (26), qui permet de fixer l'emballage (26) autour du rouleau de matière (28) pour protéger le rouleau de matière (28) jusqu'à son utilisation, qui permet à l'emballage (26) d'être enlevé du rouleau de matière (28) lorsque le rouleau de matière (28) doit être utilisé, et qui permet à l'emballage (26) d'être un emballage réutilisable (26) permettant une utilisation subséquente sur d'autres rouleaux de matière, **caractérisé en ce que** le moyen d'attache (40) est un moyen d'attache à boucles et crochets (40), et le moyen d'attache à boucles et crochets (40) comprend une plage (42) qui est sur une face interne (44) d'une première extrémité (46) de la portion d'enveloppement de corps (30) et qui s'étend en travers de toute la face interne (44) de la première extrémité (46) de la portion d'enveloppement de corps (30), une pluralité de bandes (48) qui sont sur une face externe (50) de la portion d'enveloppement de corps (30) et qui s'étendent transversalement en travers de la face externe (50) de la portion d'enveloppement de corps (30) de telle sorte que la plage (42) et la pluralité de bandes (48) puissent être attachées les unes aux autres pour permettre à l'emballage (26) d'être fixé autour de rouleaux de matière de différents diamètres, et une première paire de bandes (54) qui sont positionnées sur la face externe (50) de la portion d'enveloppement de corps (30) et qui s'étendent longitudinalement respectivement le long de chaque bord d'une deuxième extrémité (52) de la portion d'enveloppement de corps (30) de manière à permettre aux premier et deuxième organes d'extrémité (32, 36) d'être attachés à la portion d'enveloppement de corps (30).

2. Emballage (26) selon la revendication 1, dans lequel la portion d'enveloppement de corps (30) a des portions de bord (60, 62) s'étendant longitudinalement qui surplombent les côtés (64) du rouleau de matière (28), dans lequel les portions de bord (60, 62) s'étendant longitudinalement peuvent être pliées de manière à s'appliquer contre les côtés (64) du rouleau de matière (28), et dans lequel les portions de bord (60, 62) s'étendant longitudinalement ont la première paire de bandes (54) pour la fixation au moyen d'attache à boucles et crochets (66) sur les premier et deuxième organes d'extrémité (32, 36).

3. Emballage (26) selon la revendication 1 ou la revendication 2, dans lequel le moyen d'attache (40) à boucles et crochets comprend une paire de bandes (56) qui sont positionnées sur la face externe (50) de la portion d'enveloppement de corps (30) et qui s'étendent longitudinalement respectivement le long de chaque bord de la deuxième extrémité (52) de la portion d'enveloppement de corps (30), et dans lequel la deuxième paire de bandes (56) se fixe à la pluralité de bandes (48) qui sont sur la face externe (50) de la portion d'enveloppement de corps (30) et qui s'étendent transversalement en travers de la face externe (50) de la portion d'enveloppement de corps (30) et donc agissent de manière à maintenir les portions de bord (60, 62) s'étendant longitudinalement dans leur état plié.

4. Emballage (26) selon l'une quelconque des revendications précédentes, dans lequel les premier et deuxième organes d'extrémité (32, 36) sont complètement séparables de la portion d'enveloppement de corps (30).

5. Emballage (26) selon l'une quelconque des revendications précédentes, et comportant un ruban réfléchissant (72) positionné à côté de la première extrémité (46) de la portion d'enveloppement de corps (30) qui doit être ouverte.

6. Emballage (26) selon l'une quelconque des revendications précédentes, et comportant une étiquette d'identité.

7. Emballage (26) selon la revendication 6, dans lequel chaque partie séparée de l'emballage (26) a l'une des étiquettes d'identité.

8. Emballage (26) selon l'une quelconque des revendications précédentes, et qui est fabriqué en un matériau résistant à l'eau.

9. Rouleau de matière (28), pourvu d'un emballage (26) selon l'une quelconque des revendications précédentes.
